# EUROPEAN PATENT APPLICATION

(11) **EP 3 382 597 A1**
(43) Date of publication of application: **03.10.2018**
(21) Application number: 17305377.8
(22) Date of filing: 30.03.2017
(51) Int. Cl.: G06K 9/00, G06K 9/03

(54) **BIOMETRIC DATA REFERENCE IMPROVEMENT**

(71) Applicant: GEMALTO SA, 92190 Meudon (FR)
(72) Inventor: LE SAUX, Nicolas, 13881 GEMENOS CEDEX (FR); ZEAMARI, Ali, 13881 GEMENOS CEDEX (FR)
(74) Representative: Thomas, Christine Marie Catherine

(57) **Abstract**

The present invention bypasses the static minutiae limitation bay allowing to enrich minutiae with recent acquired minutiae after a successful authentication and thus allowing to manage the evolution of the minutiae. It thus concerns a device (D) having a biometric sensor (BS) to acquire biometric minutiae (BM) from a user of the device (D), said device (D) having a stored minutiae reference (MR) for this user and a comparator (COMP) to compare the acquired biometric minutiae (BM) with the minutiae reference (MR) and to authenticate the user as soon as the comparison is above a matching threshold, the device (D) being characterized in that it comprises an enrichment module (ENRM) to detect a successful authentication, and upon successful authentication, to inspect the corresponding acquired biometric minutiae (BM) for relevant minutiae (RM) not known in the minutiae reference (MR) and to add or modify such relevant minutiae (RM) to the stored minutiae reference (MR) to enrich it.

## Description

### FIELD OF THE INVENTION

The present invention relates to a device having a biometric sensor to acquire biometric minutiae from a user of the device, said device having a stored minutiae reference for this user and a comparator to compare the acquired biometric minutiae with the minutiae reference and to authenticate the user as soon as the comparison is above a matching threshold.

The invention also pertains to a method to enrich biometric minutiae and manage evolution of minutiae reference.

### BACKGROUND OF THE INVENTION

Currently, any kind of biometric authentication comprises an enrolment phase where minutiae are acquired before any authentication to be performed. Such minutiae acquired during the enrollment phase are stored in the device for later authentication. Any matching of acquired biometric data in comparison with the stored minutiae reference.

In general, the enrolment procedure requires that the user presents different times its biometric data, i.e. eyes, fingerprint, voice... Once done, a resulting minutiae reference is stored in the device. Then the acquired minutia or data are compared using a matching algorithm based on a comparison algorithm that compares extracted data, minutia or raw data, to the stored minutiae reference. If the result of the comparison is above a predetermined threshold the user is authenticated.

In the state-of-the-art, minutiae references are thus static. Once enrolled, the user does not have possibility to modify the minutiae reference. Security is of course at stake. The possibility to modify at willing the minutiae reference would of course ruin any interest of the biometric method and is not at all investigated by any of the current biometric devices manufacturers.

### SUMMARY OF THE INVENTION

The present invention proposes a breakthrough approach in terms of minutiae reference.

The present invention is defined, in its broadest sense, as a device having a biometric sensor to acquire biometric minutiae from a user of the device, said device having a stored minutiae reference for this user and a comparator to compare the acquired biometric minutiae with the minutiae reference and to authenticate the user as soon as the comparison is above a matching threshold, the device being characterized in that it comprises an enrichment module to detect a successful authentication, and upon successful authentication, to inspect the corresponding acquired biometric minutiae for relevant minutiae not known in the minutiae reference and to add or modify such relevant minutiae to the stored minutiae reference to enrich it.

The invention breaks the prejudices of static minutiae references by proposing to modify the minutiae references directly on the field. The purpose of this invention is indeed to continuously enrich the stored data upon successful authentication when of good quality. The minutia references are thus continuously enriched with recent data from the user and allows to manage the evolution of the minutiae.

The method bypasses the static minutiae limitation bay allowing to enrich minutiae with recent acquired minutiae after a successful authentication.

This invention allows to manage the evolution of the minutiae. This could bring some benefits in some particular use cases such as evolution of minutiae due to aging, especially for children, and management of alteration of biometric data due to scars for instance.

This invention allows also to enrich an already acquired minutiae by adding missing parts. This acquisition allows to increase the user experience.

Such an auto-learning could be particularly valuable it at least two main situations as it enables to manage the evolution of biometric data of the user for example in case of a wound causing a scar or any other cause of a change on a minutia..

The invention also enables to enrich the area of minutia, for example for fingerprint by adding area that where not acquired during the initial enrolment in order to increase rate of successful recognition.

With the invention, the minutia are continuously enriched with recent data from the user and the invention thus allows to manage the evolution of the minutiae which is not the case in the state-of-the-art solutions. The invention is a way to improve user experience by increasing the rate of good matching. In fact, a better quality of extracted data is obtained and so less reject are observed and a better user experience is obtained.

A preferred embodiment, the comparator being adapted to evaluate a quality level of the authentication, the enrichment module uses for enrichment the acquired biometric minutiae only when the authentication has reached a predetermined quality level.

This embodiment enables to select authentications of good quality only to enrich the minutiae reference as stored. It filters the weak quality authentication where wrong minutiae could be introduced in the stored minutiae reference.

According to a particular feature of the invention, the comparator is adapted to increase the matching threshold in relation with the evolution of the stored minutiae reference.

This feature enables to increase the quality of the authentication by increasing the matching threshold as far as the quality of the minutiae reference increases. It indeed allows to increase the threshold when enough data are acquired for the minutiae reference.

According to an advantageous feature, the minutiae having weights in the stored minutiae reference, the enrichment module allocates more weight to recently acquired biometric minutiae in the stored minutiae reference.

This enables to favor the recent acquisition of minutiae in the establishment of the minutiae reference. This feature is particularly adapted to situations where a scar appears among the minutiae of the user or where the user is a child and grows.

The present invention also relates to a method to enrich minutiae reference as stored in a device having a biometric sensor to acquire biometric minutiae from a user of the device and a comparator to compare in a comparison step the acquired biometric minutiae with the minutiae reference and to authenticate the user as soon as the comparison is above a matching threshold, said method comprising, upon successful authentication, the step of inspecting the corresponding acquired biometric minutiae for relevant minutiae not known in the minutiae reference and the step of adding or modifying such relevant minutiae to the stored minutiae reference to enrich it.

Here again, the simple idea to enrich minutiae reference as stored in a biometric device is a breakthrough where the minutiae references are well known to be required to be static and persistent in time.

### BRIEF DESCRIPTION OF THE DRAWINGS

The following description and the annexed drawings set forth in detail certain illustrative aspects and are indicative of but a few of the various ways in which the principles of the embodiments may be employed. Other advantages and novel features will become apparent from the following detailed description when considered in conjunction with the drawings and the disclosed embodiments are intended to include all such aspects and their equivalents.
- Figure 1 represents a device of the invention;
- Figure 2 shows a flowchart of the method of the invention.

### DETAILED DESCRIPTION OF EMBODIMENTS OF THE INVENTION

For a more complete understanding of the invention, the invention will now be described in detail with reference to the accompanying drawings. The detailed description will illustrate and describe what is considered as a preferred embodiment of the invention. It should of course be understood that various modifications and changes in form or detail could readily be made without departing from the spirit of the invention. It is therefore intended that the invention may not be limited to the exact form and detail shown and described herein, nor to anything less than the whole of the invention disclosed herein and as claimed hereinafter. The same elements have been designated with the same references in the different drawings. For clarity, only those elements and steps which are useful to the understanding of the present invention have been shown in the drawings and will be described.

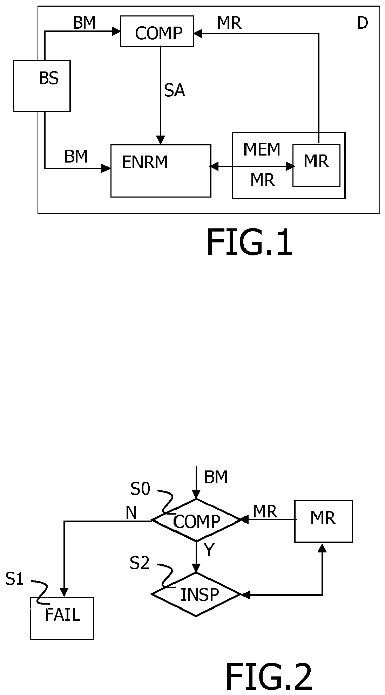

Figure 1 schematically shows a device D of the invention. This device D comprises having a biometric sensor BS to acquire biometric minutiae BM from a user of the device D. The device D also has a memory MEM in which a minutiae reference MR is stored for this user. A comparator COMP in device D then compares the acquired biometric minutiae BM with the minutiae reference MR. As generally implemented in such comparator according to the state of the art, the comparison is evaluated and quantified and the user is then authenticated as soon as the comparison is above a matching threshold.

In the invention, the device D comprises an enrichment module ENRM. This enrichment module ENRM is adapted to detect a successful authentication SA by the comparator COMP. Upon successful authentication SA, the enrichment module ENRM inspect the corresponding acquired biometric minutiae BM for relevant minutiae RM not known in the minutiae reference MR. The enrichment module is further adapted to add or modify such relevant minutiae RM to the stored minutiae reference MR to enrich it.

As shown on figure 2, the method of the invention thus comprises a first step S0 of comparison, this comparison resulting in an authentication of not, case Y and N respectively.

In the case where the authentication failed (case N), the invention is not active and the user is informed that the authentication failed in a step S1.

In the case the authentication succeeds (case Y), the invention is active and the enrichment module ENRM inspects the successful authentication SA in step S2. This inspection INSP uses the stored minutia reference MR.

In the above detailed description, reference is made to the accompanying drawings that show, by way of illustration, specific embodiments in which the invention may be practiced. These embodiments are described in sufficient detail to enable those skilled in the art to practice the invention. The above detailed description is, therefore, not to be taken in a limiting sense, and the scope of the present invention is defined only by the appended claims, appropriately interpreted, along with the full range of equivalents to which the claims are entitled.

## Claims

1. Device (D) having a biometric sensor (BS) to acquire biometric minutiae (BM) from a user of the device (D), said device (D) having a stored minutiae reference (MR) for this user and a comparator (COMP) to compare the acquired biometric minutiae (BM) with the minutiae reference (MR) and to authenticate the user as soon as the comparison is above a matching threshold, the device (D) being **characterized in that** it comprises an enrichment module (ENRM) to detect a successful authentication, and upon successful authentication, to inspect the corresponding acquired biometric minutiae (BM) for relevant minutiae (RM) not known in the minutiae reference (MR) and to add or modify such relevant minutiae (RM) to the stored minutiae reference (MR) to enrich it.

2. Device (D) according to claim 1, wherein, the comparator (COMP) being adapted to evaluate a quality level of the authentication, the enrichment module (ENRM) uses for enrichment the acquired biometric minutiae (BM) only when the authentication has reached a predetermined quality level.

3. Device (D) according to claim 1, wherein the comparator (COMP) is adapted to increase the matching threshold in relation with the evolution of the stored minutiae reference (MR).

4. Device (D) according to claim 1, wherein, the minutiae having weights in the stored minutiae reference (MR), the enrichment module (ENRM) allocates more weight to recently acquired biometric minutiae in the stored minutiae reference (MR).

5. Method to enrich minutiae reference (MR) as stored in a device (D) having a biometric sensor (BS) to acquire biometric minutiae (BM) from a user of the device (D) and a comparator (COMP) to compare in a comparison step (S0) the acquired biometric minutiae (BM) with the minutiae reference (MR) and to authenticate the user as soon as the comparison is above a matching threshold, said method comprising, upon successful authentication, the step (S2) of inspecting the corresponding acquired biometric minutiae (BM) for relevant minutiae (RM) not known in the minutiae reference (MR) and the step of adding or modifying such relevant minutiae (RM) to the stored minutiae reference (MR) to enrich it.
